(19) Europäisches Patentamt
European Patent Office
Office européen des brevets

(11) **EP 3 581 879 B1**

(12) **EUROPÄISCHE PATENTSCHRIFT**

(45) Veröffentlichungstag und Bekanntmachung des Hinweises auf die Patenterteilung:
**26.07.2023 Patentblatt 2023/30**

(21) Anmeldenummer: **19178393.5**

(22) Anmeldetag: **05.06.2019**

(51) Internationale Patentklassifikation (IPC):
*G01B 9/02* (2022.01)    *G01B 9/02055* (2022.01)
*G01B 11/24* (2006.01)    *G03H 1/04* (2006.01)
*G01B 9/02001* (2022.01)    *G01B 9/02015* (2022.01)

(52) Gemeinsame Patentklassifikation (CPC):
**G01B 11/2441; G01B 9/02007; G01B 9/02032; G01B 9/02047; G01B 9/02067; G01B 9/02072; G01B 9/02077; G01B 9/02094; G03H 1/0443;** G03H 2001/0033; G03H 2001/0456; G03H 2223/26

(54) **VORRICHTUNG UND VERFAHREN ZUR INTERFEROMETRISCHEN VERMESSUNG EINER OBERFLÄCHE EINES BEWEGTEN PRÜFLINGS**

METHOD AND DEVICE FOR INTERFEROMETRIC MEASUREMENT OF A SURFACE OF A MOVING SPECIMEN

DISPOSITIF ET PROCÉDÉ DE MESURE INTERFÉROMÉTRIQUE D'UNE SURFACE D'UN ECHANTILLON EN MOUVEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2018 DE 102018113979**

(43) Veröffentlichungstag der Anmeldung:
**18.12.2019 Patentblatt 2019/51**

(73) Patentinhaber: **Fraunhofer-Gesellschaft zur Förderung der angewandten Forschung e.V. 80686 München (DE)**

(72) Erfinder:
• **BECKMANN, Tobias**
  **79211 Denzlingen (DE)**
• **SCHILLER, Annelie**
  **79098 Freiburg (DE)**
• **FRATZ, Markus**
  **79199 Kirchzarten (DE)**

(74) Vertreter: **WSL Patentanwälte Partnerschaft mbB Kaiser-Friedrich-Ring 98 65185 Wiesbaden (DE)**

(56) Entgegenhaltungen:
WO-A1-2017/145145     US-A1- 2010 033 733
US-A1- 2010 128 276     US-A1- 2012 026 508

## Beschreibung

Die vorliegende Erfindung betrifft eine Vorrichtung zur interferometrischen Vermessung einer Oberfläche eines bewegten Prüflings mit einem Interferometer, das einen Objektpfad und einen Referenzpfad aufweist, wobei das Interferometer derart ausgestaltet und eingerichtet ist, dass eine Form einer Oberfläche des Prüflings vermessbar ist, und wobei eine Winkelhalbierende zwischen einem die Oberfläche des Prüflings beleuchtenden Strahl des Objektspfads und der Beobachtungsrichtung einen Sensitivitätsvektor definiert, einer Kompensationseinrichtung, die derart ausgestaltet und eingerichtet ist, dass mit der Kompensationseinrichtung eine optische Weglängendifferenz zwischen dem Objektpfad und dem Referenzpfad des Interferometers veränderbar einstellbar ist, einer Messeinrichtung, die derart eingerichtet und ausgestaltet ist, dass die Messeinrichtung in dem Betrieb der Vorrichtung die Bewegungsrichtung der Oberfläche des Prüflings und/oder den Betrag der Geschwindigkeit der Oberfläche des Prüflings in der Bewegungsrichtung als ein Maß für den Betrag der Geschwindigkeit der Oberfläche des Prüflings in der Richtung parallel zu dem Sensitivitätsvektor erfasst, einer Steuereinrichtung, wobei die Steuereinrichtung derart wirksam mit der Kompensationseinrichtung verbunden ist, dass die Weglängendifferenz zwischen dem Objektpfad und dem Referenzpfad einstellbar steuerbar ist, wobei die Steuereinrichtung derart wirksam mit der Messeinrichtung verbunden ist, dass die Steuereinrichtung in dem Betrieb der Vorrichtung ein Messsignal von der Messeinrichtung erhält, das das Maß für den Betrag der Geschwindigkeit der Oberfläche des Prüflings in der Richtung parallel zu dem Sensitivitätsvektor umfasst, wobei die Steuereinrichtung derart eingerichtet und ausgestaltet ist, dass die Steuereinrichtung in einem Betrieb der Vorrichtung die Kompensationseinrichtung so steuert, dass eine durch die Kompensationseinrichtung bewirkte Änderung der Weglängendifferenz zwischen dem Objektpfad und dem Referenzpfad gleich einer aus einer Geschwindigkeit der Oberfläche des Prüflings in einer Richtung parallel zu dem Sensitivitätsvektor resultierenden Änderung der Weglängendifferenz zwischen dem Objektpfad und dem Referenzpfad ist, um die durch die Geschwindigkeit der Oberfläche des Prüflings in der Richtung parallel zu dem Sensitivitätsvektor bewirkte Phasenänderung zu kompensieren, und wobei die Steuereinrichtung derart eingerichtet und ausgestaltet ist, dass die Steuereinrichtung in dem Betrieb der Vorrichtung aus der erfassten Bewegungsrichtung der Oberfläche des Prüflings und/oder dem erfassten Betrag der Geschwindigkeit in der Bewegungsrichtung den Betrag der Geschwindigkeit der Oberfläche des Prüflings in der Richtung parallel zu dem Sensitivitätsvektor bestimmt, und dass die Steuereinrichtung in dem Betrieb der Vorrichtung aus dem Betrag der Geschwindigkeit der Oberfläche des Prüflings parallel zu dem Sensitivitätsvektor die einzustellende Weglängendifferenz bestimmt.

Die vorliegende Erfindung betrifft zudem ein Verfahren zur interferometrischen Vermessung einer Oberfläche eines bewegten Prüflings mit den Schritten Aufteilen von elektromagnetischer Strahlung in einem Interferometer auf einen Objektpfad und einen Referenzpfad, Anordnen des Prüflings in dem Objektpfad, wobei eine Winkelhalbierende zwischen einem die Oberfläche des Prüflings beleuchtenden Strahl des Objektspfads und der Beobachtungsrichtung des Objektpfads einen Sensitivitätsvektor definiert, Vermessen einer Form der Oberfläche des Prüflings, Erfassen einer Bewegungsrichtung der Oberfläche des Prüflings und/oder eines Betrag der Geschwindigkeit der Oberfläche des Prüflings in der Bewegungsrichtung mit einer Messeinrichtung, Bestimmen des Betrags der Geschwindigkeit der Oberfläche des Prüflings in der Richtung parallel zu dem Sensitivitätsvektor aus der erfassten Bewegungsrichtung der Oberfläche des Prüflings und/oder dem erfassten Betrag der Geschwindigkeit in der Bewegungsrichtung, und Bestimmen der einzustellende Weglängendifferenz aus dem Betrag der Geschwindigkeit der Oberfläche des Prüflings parallel zu dem Sensitivitätsvektor.

Aus dem Stand der Technik sind Vorrichtungen und Verfahren zur interferometrischen Vermessung von Oberflächen eines bewegten Prüflings bekannt, wobei bei diesen die Bewegungsrichtung des Prüflings immer senkrecht zu dem Sensitivitätsvektor steht. Mit anderen Worten ausgedrückt hat in diesen Vorrichtungen die Bewegung des Prüflings keine Komponente in Richtung des Sensitivitätsvektors.

Dies ist deshalb wichtig, da alle Bewegungen des Prüflings in einer Richtung parallel zu dem Sensitivitätsvektor zu einer Änderung der optischen Weglänge in dem Objektpfad des Interferometers führen und damit zu einer Änderung der Phasendifferenz zwischen der elektromagnetischen Strahlung in dem Objektpfad und dem Referenzpfad. Da eine solche Weglängenänderung in dem Objektpfad nicht zu unterscheiden ist von einer Weglängenänderung in dem Objektpfad, welche durch eine Änderung der Oberflächentopologie hervorgerufen wird, führt eine Bewegung des Prüflings mit einer Bewegungskomponente in der Richtung des Sensitivitätsvektors während der endlichen Integrationszeit des Sensors zumindest zu einer Reduzierung des Interferenzkontrasts, wenn nicht sogar zu einer Verfälschung des Messergebnisses oder zu keinem Messergebnis.

Aus der US 4,480,914 ist ein Antriebssystem für einen Interferometerspiegel bekannt, welches Positions- und Ausrichtungsfehler des Interferometerspiegels aufgrund von Vibrationen kompensiert, indem es die Positions- und Ausrichtungsfehler des Spiegels erfasst und den Spiegel mit Hilfe von Aktuatoren neu ausrichtet, um die Fehler zu minimieren. Das dort offenbarte Antriebssystem kompensiert jedoch keine absichtlich, beispielsweise in einem Produktions- oder Prüfprozess, herbeigeführten Bewegungen einer hinsichtlich ihrer Form zu vermessenden Oberfläche, sondern zufällige statistische Bewegungen.

Aus der US 2012/0026508 A1 ist eine Vorrichtung zur Bestimmung von Oberflächeneigenschaften bekannt, wobei die Vorrichtung Licht mit einer bestimmten Wellenlänge auf eine Probenoberfläche sowie auf eine Referenzoberfläche leitet und die jeweils an den Oberflächen reflektierten Strahlungen miteinander interferieren lässt, um aus dem Interferenzmuster das Oberflächenprofil und eine Höhenkarte der Probenoberfläche zu berechnen.

In der WO 2017/145145 A1 wird ein Verfahren und eine Vorrichtung zur Überwachung eines Bewegungsparameters eines sich bewegenden Objektes beschrieben. Dazu weist die Vorrichtung eine Bildgebungseinheit auf, welche die Bewegung eines Objektes in einer Bildebene abbildet.

Die US 2010/0128276 A1 beschreibt ein Interferometer, bei welchem ein Weglängenunterschied zwischen einer Referenz- und Probenstrahlung variiert wird, wobei an zwei Referenzobjekten reflektierte Strahlung mit einer an einer Probe reflektierten Strahlung überlagert wird um Ungenauigkeiten in der Interferenzmessungen beispielsweise aufgrund von Vibrationen zu reduzieren.

Aus der US 2010/0033733 A1 ist ebenfalls ein Vibrations-resistentes Interferometer bekannt, um Oberflächenprofile einer Probe zu vermessen.

Daher ist es Aufgabe der vorliegenden Erfindung gegenüber diesem Stand der Technik, eine Vorrichtung und ein Verfahren zur interferometrischen Vermessung einer Oberfläche eines gezielt in einer beliebigen Richtung bewegten Prüflings bereitzustellen, bei dem die Bewegungsstrecke nicht gemessen werden muss und bei dem die Bewegungsstrecke auch erheblich größer als die Lichtwellenlänge sein kann.

Erfindungsgemäß wird zumindest eine dieser Aufgaben gelöst durch eine Vorrichtung zur interferometrischen Vermessung einer Oberfläche eines bewegten Prüflings mit einem Interferometer, das einen Objektpfad und einen Referenzpfad aufweist, wobei das Interferometer derart ausgestaltet und eingerichtet ist, dass eine Form der Oberfläche des Prüflings vermessbar ist, wobei eine Winkelhalbierende zwischen einem die Oberfläche des Prüflings beleuchtenden Strahl des Objektspfads und einer Beobachtungsrichtung des Objektpfads einen Sensitivitätsvektor definiert, mit einer Kompensationseinrichtung, die derart ausgestaltet und eingerichtet ist, dass mit der Kompensationseinrichtung eine optische Weglängendifferenz zwischen dem Objektpfad und dem Referenzpfad des Interferometers veränderbar einstellbar ist, und mit einer Steuereinrichtung, wobei die Steuereinrichtung derart wirksam mit der Kompensationseinrichtung verbunden ist, dass die Weglängendifferenz zwischen dem Objektpfad und dem Referenzpfad einstellbar steuerbar ist, wobei die Steuereinrichtung derart eingerichtet und ausgestaltet ist, dass die Steuereinrichtung in einem Betrieb der Vorrichtung die Kompensationseinrichtung so steuert, dass eine durch die Kompensationseinrichtung bewirkte Änderung der Weglängendifferenz zwischen dem Objektpfad und dem Referenzpfad gleich einer aus einer Geschwindigkeit der Oberfläche des Prüflings in einer Richtung parallel zu dem Sensitivitätsvektor resultierenden Änderung der Weglängendifferenz zwischen dem Objektpfad und dem Referenzpfad ist, um die durch die Geschwindigkeit des Prüflings in der Richtung parallel zu dem Sensitivitätsvektor bewirkte Phasenänderung zu kompensieren, einer Kompensationseinrichtung, die derart ausgestaltet und eingerichtet ist, dass mit der Kompensationseinrichtung eine optische Weglängendifferenz zwischen dem Objektpfad und dem Referenzpfad des Interferometers veränderbar einstellbar ist, einer Messeinrichtung, die derart eingerichtet und ausgestaltet ist, dass die Messeinrichtung in dem Betrieb der Vorrichtung die Bewegungsrichtung der Oberfläche des Prüflings und/oder den Betrag der Geschwindigkeit der Oberfläche des Prüflings in der Bewegungsrichtung als ein Maß für den Betrag der Geschwindigkeit der Oberfläche des Prüflings in der Richtung parallel zu dem Sensitivitätsvektor erfasst, einer Steuereinrichtung, wobei die Steuereinrichtung derart wirksam mit der Kompensationseinrichtung verbunden ist, dass die Weglängendifferenz zwischen dem Objektpfad und dem Referenzpfad einstellbar steuerbar ist, wobei die Steuereinrichtung derart wirksam mit der Messeinrichtung verbunden ist, dass die Steuereinrichtung in dem Betrieb der Vorrichtung ein Messsignal von der Messeinrichtung erhält, das das Maß für den Betrag der Geschwindigkeit der Oberfläche des Prüflings in der Richtung parallel zu dem Sensitivitätsvektor umfasst, wobei die Steuereinrichtung derart eingerichtet und ausgestaltet ist, dass die Steuereinrichtung in einem Betrieb der Vorrichtung die Kompensationseinrichtung so steuert, dass eine durch die Kompensationseinrichtung bewirkte Änderung der Weglängendifferenz zwischen dem Objektpfad und dem Referenzpfad gleich einer aus einer Geschwindigkeit der Oberfläche des Prüflings in einer Richtung parallel zu dem Sensitivitätsvektor resultierenden Änderung der Weglängendifferenz zwischen dem Objektpfad und dem Referenzpfad ist, um die durch die Geschwindigkeit der Oberfläche des Prüflings in der Richtung parallel zu dem Sensitivitätsvektor bewirkte Phasenänderung zu kompensieren, und wobei die Steuereinrichtung derart eingerichtet und ausgestaltet ist, dass die Steuereinrichtung in dem Betrieb der Vorrichtung aus der erfassten Bewegungsrichtung der Oberfläche des Prüflings und/oder dem erfassten Betrag der Geschwindigkeit in der Bewegungsrichtung den Betrag der Geschwindigkeit der Oberfläche des Prüflings in der Richtung parallel zu dem Sensitivitätsvektor bestimmt, und dass die Steuereinrichtung in dem Betrieb der Vorrichtung aus dem Betrag der Geschwindigkeit der Oberfläche des Prüflings parallel zu dem Sensitivitätsvektor die einzustellende Weglängendifferenz bestimmt, wobei die Messeinrichtung von dem Interferometer gebildet ist, wobei zumindest eine räumliche Periodizität eines Interferenzmusters das Maß für die Bewegungsrichtung der Oberfläche des Prüflings oder für den Betrag der Geschwindigkeit in der Bewegungsrichtung bildet oder der Interferenzkontrast eines Interferenzmusters das Maß für die Bewegungsrichtung der Oberfläche des Prüflings oder für den Betrag der Geschwindigkeit in der Bewegungsrichtung bildet.

Es ist die grundlegende Idee der vorliegenden Erfindung, die Form der Oberfläche eines bewegten Prüflings mit einer beliebigen Bewegungsrichtung und einer Geschwindigkeit in der Bewegungsrichtung zu vermessen. Dabei lässt sich die Bewegungsrichtung der von dem Interferometer erfassten Oberfläche des Prüflings in dem Sinne der vorliegenden Erfindung immer durch eine Komponente mit einer Richtung parallel zu dem Sensitivitätsvektor und eine Komponente mit einer Richtung senkrecht zu dem Sensitivitätsvektor beschreiben. Anders als Bewegungen des Prüflings mit einer Bewegungsrichtung der erfassten Oberfläche, die ausschließlich eine Komponente in der Richtung senkrecht zu dem Sensitivitätsvektor aufweist, hat jede Bewegung der Oberfläche des Prüflings in einer anderen Bewegungsrichtung immer auch eine Komponente parallel zur Richtung des Sensitivitätsvektors und beeinflusst somit die interferometrische Messung. Insbesondere führt eine Geschwindigkeitskomponente der Oberfläche des Prüflings parallel zum Sensitivitätsvektor zu einer Reduzierung des Kontrasts der Interferenz, da die verwendeten Detektoren immer eine endliche Integrationszeit aufweisen.

An diesem Punkt setzt die vorliegende Erfindung an. Erfindungsgemäß steuert die Steuereinrichtung die Kompensationseinrichtung gezielt so, dass sie die Änderung der Weglängendifferenz zwischen dem Objektpfad und dem Referenzpfad aufgrund der Bewegung der Oberfläche des Prüflings kompensiert. Durch diese Kompensation wird die Phasendifferenz zwischen der elektromagnetischen Strahlung im Objektpfad und im Referenzpfad über die Integrationszeit des Detektors des Interferometers im Wesentlichen konstant gehalten.

Gegenüber dem Stand der Technik zeichnen sich die erfindungsgemäße Vorrichtung sowie das erfindungsgemäße Verfahren dadurch aus, dass sie es ermöglichen eine kontinuierliche Bewegung des Prüflings mit einer beliebigen Bewegungsrichtung für beliebige Weglängen der Bewegung zu kompensieren. Insbesondere ermöglichen es die erfindungsgemäße Vorrichtung und das erfindungsgemäße Verfahren eine beliebige Bewegung des Prüflings zu kompensieren, wobei eine Projektion einer Weglänge, um die sich die in dem Objektpfad befindende Oberfläche des Prüflings während einer Integrationszeit eines zum Vermessen der Oberfläche verwendeten Detektors in Richtung des Sensitivitätsvektors bewegt, auf die Richtung des Sensitivitätsvektors gleich der Wellenlänge der elektromagnetischen Strahlung oder größer ist.

Für die Kompensation der Änderung der Weglängendifferenz aufgrund der Bewegung der Oberfläche des Prüflings mit Hilfe der von der Kompensationseinrichtung bewirkten Änderung der Weglängendifferenz gibt es dabei drei grundsätzlich unterschiedliche Varianten.

Als Bewegungsrichtung der Oberfläche des Prüflings werden im Sinne der vorliegenden Anmeldung die Richtungen der Bewegung derjenigen Punkte der Oberfläche des Prüflings bezeichnet, welche momentan mit dem Interferometer erfasst werden.

Bewegt sich die Oberfläche des Prüflings in einer Ausführungsform der Erfindung mit einer Geschwindigkeit und sind der Betrag dieser Geschwindigkeit und die Bewegungsrichtung bekannt, so lässt sich der Betrag der Geschwindigkeit des Prüflings in der Richtung parallel zu dem Sensitivitätsvektor daraus berechnen und als vorgegeben voraussetzen. Dabei errechnet die Steuereinrichtung den Betrag der Geschwindigkeit der Oberfläche des Prüflings in der Richtung parallel zu dem Sensitivitätsvektor. Die Steuereinrichtung bestimmt aus dem Betrag der Geschwindigkeit in der Richtung parallel zu dem Sensitivitätsvektor die zu kompensierende Weglängenänderung und damit die von der Kompensationseinrichtung zu bewirkende Änderung der optischen Weglängendifferenz zwischen dem Objektpfad und dem Referenzpfad und gibt diese zu bewirkende Änderung der Kompensationseinrichtung vor.

In einer ersten Ausführungsform ist daher der Betrag der Geschwindigkeit der Oberfläche des Prüflings in der Richtung parallel zu dem Sensitivitätsvektor, d.h. diejenige Komponente der Geschwindigkeit des Prüflings in der Bewegungsrichtung, welche parallel zu dem Sensitivitätsvektor ist, vorbekannt. Dies ist beispielsweise in Anwendungen der Fall, bei denen der Betrag der Geschwindigkeit der Oberfläche des Prüflings in einer Fertigungslinie oder einer Maschine einstellbar ist, z.B. von einer Steuerung, insbesondere aber der Steuereinrichtung der erfindungsgemäßen Vorrichtung, vorgegeben ist und die Bewegungsrichtung beispielsweise durch die Maschine definiert ist.

Daher ist die Steuereinrichtung in einer Ausführungsform derart eingerichtet und ausgestaltet, dass sie in einem Betrieb der Vorrichtung aus dem vorbekannten Betrag der Geschwindigkeit des Prüflings in der Richtung parallel zu dem Sensitivitätsvektor die von der Kompensationseinrichtung zu bewirkende Änderung der Weglängendifferenz zwischen dem Objektpfad und dem Referenzpfad bestimmt.

Die Geschwindigkeit der Oberfläche des Prüflings wird mit einer Messeinrichtung, welche Teil der erfindungsgemäßen Vorrichtung ist, bestimmt. Sind die Bewegungsrichtung und der Betrag der Geschwindigkeit in der Bewegungsrichtung bekannt, so kann daraus der Betrag der Geschwindigkeit in der Richtung parallel zum Sensitivitätsvektor bestimmt werden. Ausführungsformen dieser Variante mit einer Messeinrichtung werden an anderer Stelle in dieser Anmeldung im Detail beschrieben.

In einer weiteren alternativen Ausführungsform wird die Änderung der Weglängendifferenz durch die Kompensationseinrichtung solange iteriert, bis der Kontrast der Interferenz wieder maximal ist. Daraus kann ein Maß für die Bewegungsrichtung / Geschwindigkeit abgeleitet werden. Eine solche Variante ist insbesondere dann geeignet, wenn die Geschwindigkeit der Oberfläche konstant ist.

Während die Kompensation für eine gleichförmige, d.h. mit konstanter Geschwindigkeit und ohne Richtungs-

4

änderung, bewegte Oberfläche einfacher durchzuführen ist, kann der Betrag der Geschwindigkeit und/oder die Richtung der Bewegung der Oberfläche grundsätzlich auch variieren, d.h. während der Erfassung der Oberfläche kleiner oder größer werden. Beispielsweise kann man die Geschwindigkeit eines Objektes mit konstanter Beschleunigung, beispielsweise im freien Fall, zum Messzeitpunkt gut vorherbestimmen, wenn die Anfangsgeschwindigkeit und Startzeitpunkt bekannt sind.

Insbesondere ist die Kompensation möglich, wenn im Falle einer Translationsbewegung mit sich änderndem Betrag der Geschwindigkeit oder einer Drehbewegung, bei welcher sich die Geschwindigkeitskomponente senkrecht zum Sensitivitätsvektor mit dem Abstand von der Drehachse auch bei konstanter Drehgeschwindigkeit ändert, oder einer Drehbewegung mit sich ändernder Winkelgeschwindigkeit, der zeitabhängige Verlauf der Geschwindigkeit oder der Winkelgeschwindigkeit bzw. der zeitabhängige Verlauf der Beschleunigung bzw. der Winkelbeschleunigung bekannt ist.

Die erfindungsgemäße Vorrichtung und das erfindungsgemäße Verfahren ermöglichen auch dann eine Vermessung der Oberfläche des Prüflings, wenn die Oberfläche in einer beliebigen Richtung bewegt wird, wobei eine Komponente der Geschwindigkeit der Oberfläche des Prüflings in einer Richtung senkrecht zu dem Sensitivitätsvektor größer ist als eine Komponente der Geschwindigkeit der Oberfläche des Prüflings in der Richtung parallel zu dem Sensitivitätsvektor. Insbesondere ist die Messung möglich, wenn die Komponente der Geschwindigkeit der Oberfläche des Prüflings in der Richtung senkrecht zu dem Sensitivitätsvektor mindestens doppelt so groß, bevorzugt mindestens 10 mal so groß und besonders bevorzugt mindestens 100 mal so groß ist wie eine Komponente der Geschwindigkeit der Oberfläche des Prüflings in der Richtung parallel zu dem Sensitivitätsvektor.

Grundsätzlich ist die vorliegende Erfindung auf alle Typen von Interferometern mit einem Referenzpfad und einem Objektpfad anwendbar.

Ein Interferometer weist eine Sensitivität für Änderungen des optischen Wegs des Objektpfads in einer Richtung parallel zu dem Sensitivitätsvektor auf. Wird der Prüfling mit einer strukturierten Oberfläche gegenüber dem Auftreffpunkt der elektromagnetischen Strahlung auf der Oberfläche des Prüflings verschoben, so kommt es aufgrund der Struktur der Oberfläche zu Änderungen des optischen Wegs des Objektpfades und Höhenunterschiede der Oberfläche des Prüflings gegenüber einer willkürlich gewählten Nulllinie können erfasst werden.

Der Sensitivitätsvektor ist als Winkelhalbierende zwischen dem die Oberfläche des Prüflings beleuchtenden Strahls des Objektpfads und der Beobachtungsrichtung des Objektpfads definiert. Im Fall einer spiegelnden Reflexion der elektromagnetischen Strahlung in dem Objektpfad an der Oberfläche des Prüflings ist die Richtung des Sensitivitätsvektors gleich der Richtung des Einfallslots. In diesem Fall ist die Beobachtungsrichtung durch den reflektierten Strahl bzw. die Winkelhalbierende eines divergenten, reflektierten Strahlenbündels gegeben.

Bei einem Speckle-Interferometer, bei welchem keine spiegelnde Reflexion auftritt, ist der Sensitivitätsvektor, dann wenn der die Oberfläche beleuchtende Strahl des Objektpfads festgelegt ist, durch die durch den Aufbau des Interferometers vorgegebene Beobachtungsrichtung unter welcher der Detektor des Interferometers den von dem beleuchtenden Strahl beleuchteten Ort auf der Oberfläche erfasst, wählbar.

Sind der den Prüfling beleuchtende Strahl des Objektspfads und die Beobachtungsrichtung des Objektpfads parallel zueinander, so ist der Sensitivitätsvektor gleich der Strahlrichtung. Häufig ist allerdings eine solche Geometrie nicht möglich oder auch nicht gewünscht.

Aus dem von einem Detektor des Interferometers erfassten Interferenzmuster (der Begriff Interferenzmuster wird in der vorliegenden Anmeldung identisch mit dem Begriff Interferogramm verwendet) können die Höhendaten der Oberfläche des Prüflings berechnet werden. Dabei gilt

$$h = \frac{\varphi \lambda}{4\pi} \frac{1}{\cos \alpha}$$

wobei $h$ die Höhe des Objekts ist, $\varphi$ die Phasendifferenz zwischen Objektpfad und Referenzpfad ist, $\lambda$ die Wellenlänge der verwendeten (monochromatischen) elektromagnetischen Strahlung ist und $\alpha$ der Winkel zwischen dem Sensitivitätsvektor und dem den Prüfling beleuchtenden Strahl ist (und somit auch der Winkel zwischen dem Sensitivitätsvektor und der Beobachtungsrichtung).

Es versteht sich, dass die Quelle in einer Ausführungsform eine Quelle zu dem Erzeugen kohärenter elektromagnetischer Strahlung ist, z.B. ein Laser.

In dem Objektpfad des Interferometers ist der Prüfling anordenbar oder der Prüfling ist in den Objektpfad angeordnet. In Strahlrichtung nach dem Prüfling wird die elektromagnetische Strahlung des Objektpfads und des Referenzpfads räumlich überlagert, um das entstehende Interferenzmuster erfassen und auswerten zu können.

In einer Ausführungsform der Erfindung umfasst das Interferometer daher eine Quelle zum Erzeugen kohärenter elektromagnetischer Strahlung, einen Strahlteiler zum Aufteilen der elektromagnetischen Strahlung in den Objektpfad und den Referenzpfad, wobei der Objektpfad derart ausgestaltet und eingerichtet ist, dass der Prüfling in dem Objektpfad aufnehmbar ist, und einen Detektor, wobei die elektromagnetische Strahlung des Objektpfads in Strahlrichtung nach dem Prüfling und die elektromagnetische Strahlung des Referenzpfads auf dem Detektor räumlich überlagert sind.

In einer Ausführungsform der Erfindung weist das Interferometer einen flächigen Detektor mit einer zeilenförmigen oder matrixförmigen Anordnung von Bildpunkten, beispielsweise eine Kamera, auf. So lässt sich das räumliche Interferenzmuster mit einer einzigen Messung bzw. einer einzigen Aufnahme erfassen. Das so aufgenommene Interferenzmuster kann dann ausgewertet und beispielsweise mit zuvor ausgewerteten Interferenzmustern verglichen werden, um eine Verformungsmessung durchzuführen. Im Fall von räumlichem Phasenschieben ist es sogar möglich, mit einer einzigen Messung die Höhendaten, d.h. insbesondere auch Verformungsdaten, der Oberfläche des Prüflings zu erfassen.

In einer Ausführungsform der Erfindung ist das Interferometer ein Speckle-Interferometer. Bei einer Streuung an einer optisch rauen Oberfläche entstehen Specklemuster, die zufällige Phasenwerte generieren.

Höhenmessungen sind insbesondere dennoch möglich mittels Mehrwellenlängenholographie, wobei die Differenzphase bei zwei oder mehr leicht unterschiedlichen Wellenlängen bestimmt wird.

In einer weiteren Ausführungsform ist das Interferometer daher ein Mehrwellenlängeninterferometer. Dies ggf. auch, um eine höhere Eindeutigkeit der ausgeführten Abstands- bzw. Höhenmessung zu erhalten.

Dabei ist es möglich, mit dem Mehrwellenlängeninterferometer die Interferogramme einer Mehrzahl von Wellenlängen gleichzeitig zu erfassen und/oder die Interferogramme einzelner Wellenlängen aus der Mehrzahl von Wellenlängen zeitlich nacheinander zu erfassen. Auch Mischformen sind möglich, bei denen die Interferogramme einer ersten Mehrzahl von Wellenlängen zeitlich vor den Interferogrammen einer zweiten Mehrzahl von Wellenlängen erfasst werden.

Selbst Verformungsmessungen, bei welchen die Oberfläche des Prüflings während den Messungen verformt wird, sind an einer rauen, streuenden Oberfläche möglich mittels Electronic Speckle Pattern Interferometry (ESPI). Dabei wird die Differenzphase aus zwei zu unterschiedlichen Zeitpunkten aufgenommenen Interferenzmustern berechnet und so die Verformung der Oberfläche, welche zwischen diesen beiden Zeitpunkten stattgefunden hat, dargestellt.

Der Prüfling in dem Sinne der vorliegenden Erfindung kann jedes geeignete Objekt sein. Von besonderem Interesse sind dabei Prüflinge mit einer Oberflächentopologie, deren Beschaffenheit, Qualität, Güte und/oder Höhe es zu bestimmen gilt. In einer Ausführungsform der Erfindung ist der Prüfling ein Zahnrad oder eine Zahnstange, wobei insbesondere die Flanken der Verzahnungen in Hinblick auf ihre Form und Güte interferometrisch zu erfassen sind. Die erfindungsgemäße Vorrichtung und das erfindungsgemäße Verfahren ermöglichen es nun, die Oberfläche der Zähne des Zahnrads oder der Zahnstange zu vermessen, wobei die Zahnstange eine lineare Bewegung ausführt oder das Zahnrad eine Drehbewegung um seine Drehachse ausführt. Insbesondere bei schräger Beobachtung d.h. einem nicht senkrecht zur Beobachtungsrichtung stehenden Sensitivitätsvektor, führen Translationsbewegungen oder Drehbewegungen zu einem sich fortlaufend ändernden Abstand jedes von dem Interferometer zu erfassenden Punktes auf der Oberfläche des Prüflings von dem Detektor. Diese Abstandsänderung gilt es mit Hilfe der erfindungsgemäßen Vorrichtung oder des erfindungsgemäßen Verfahrens zu kompensieren.

Die vorliegende Erfindung ermöglicht insbesondere die nicht-radiale Vermessung eines Zahnrads als Prüfling in Bewegung. Zudem ermöglicht sie die Vermessung von bewegten Prüflingen mit einer beliebigen Bewegungsrichtung verglichen mit dem Sensitivitätsvektor der Messung auf der zu erfassenden Oberfläche.

Als Kompensationseinrichtung in dem Sinne der vorliegenden Erfindung kann jede Einrichtung dienen, die dazu in der Lage ist, die optische Weglängendifferenz zwischen dem Objektpfad und dem Referenzpfad einstellbar zu verändern, d.h. die optische Weglängendifferenz aufgrund der Bewegung des Prüflings mit einer Komponente parallel zu dem Sensitivitätsvektor zu kompensieren.

Grundsätzlich kann die Kompensationseinrichtung wahlweise in dem Referenzpfad, dem Objektpfad oder in beiden angeordnet sein. In einer bevorzugten Ausführungsform allerdings ist die Kompensationseinrichtung in dem Referenzpfad angeordnet.

In einer Ausführungsform der Erfindung umfasst die Kompensationseinrichtung eine die optische Weglänge des Referenzpfads und/oder des Objektpfads ändernde Einrichtung.

In einer zur Mehrwellenlängeninterferometrie geeigneten Ausführungsform, kann die Vorrichtung für jede Wellenlänge eine gesonderte Kompensationseinrichtung aufweisen. Dazu ist vorgesehen, dass die Vorrichtung für jede Wellenlänge einen zumindest abschnittsweise räumlich von den anderen Referenzpfaden getrennten Referenzpfad aufweist, so dass die Kompensation der einzelnen Wellenlängen voneinander unabhängig erfolgen kann. Auf diese Weise kann die Kompensation für jede der Wellenlängen exakt erfolgen.

In einer Ausführungsform umfasst die Kompensationseinrichtung daher einen auf einem von der Steuereinrichtung gesteuerten Aktor, beispielsweise einem Linearversteller, einem Piezoversteller oder einem Shaker, angeordneten Reflektor für die elektromagnetische Strahlung in dem Referenzpfad oder dem Objektpfad, beispielsweise einen Spiegel, einen Retroreflektor oder ein Prisma. Mit dieser Anordnung kann in dem Betrieb der Vorrichtung die optische Weglänge in dem Referenzpfad oder in dem Objektpfad variiert werden und damit eine Änderung des optischen Weglängenunterschieds zwischen dem Objektpfad und dem Referenzpfad bewirkt werden.

In einer weiteren Ausführungsform umfasst die Kompensationseinrichtung ein den Brechungsindex in einem Abschnitt des Referenzpfads und/oder des Objektpfads änderndes Element, wie z.B. einen elektrooptischen Modulator, einen akustooptischen Modulator, eine rotierende Halbwellenplatte, einen bewegbaren Glaskörper mit variierender Dicke oder variierendem Brechungsindex, insbesondere einen Keil oder ein Prisma, oder ein diffraktives Element.

Insbesondere bei einer Bewegung der Oberfläche des Prüflings in einer Bewegungsrichtung, welche einen großen Winkel mit dem Sensitivitätsvektor einschließt, können große Phasenverschiebungen und damit Weglängenänderungen zur Kompensation erforderlich werden. Solche großen Phasenverschiebungen können durch entsprechend große Verschiebungen eines Spiegels durchaus erreicht werden. Allerdings ist es in einer Ausführungsform möglich, dass die Kompensationseinrichtung ausgehend von einer anfänglichen Weglängendifferenz eine Änderung der Weglängendifferenz zwischen dem Objektpfad und dem Referenzpfad von einem vorgegebenen Vielfachen der Wellenlänge der verwendeten elektromagnetischen Strahlung bewirkt, nach Erreichen einer Änderung der Weglängendifferenz von $n\lambda$, wobei n eine ganze Zahl und $\lambda$ die Wellenlänge ist, in ihre Ausgangslage, d.h. zu der anfänglichen Weglängendifferenz vor dem Bewirken der Änderung, zurückkehrt und erneut eine Änderung der Weglängendifferenz von maximal $n\lambda$ bewirkt, so dass in Summe die erforderliche Gesamtphasenverschiebung erreicht wird. Es versteht sich, dass dieser Vorgang mehr als zweimal wiederholt wird, wenn das vorgegebene Vielfache der Wellenlänge größer als 2 $n\lambda$ ist. Trägt man die optische Weglängendifferenz gegen die Zeit auf, so ergibt sich ein Sägezahn-Diagramm. Der letzte Zahn kann auch eine Änderung der Weglängendifferenz von weniger als $n\lambda$ bewirken.

In einer alternativen Ausführungsform der Erfindung umfasst die Kompensationseinrichtung eine Einrichtung zu dem Ändern der geometrischen Phase, d.h. insbesondere eine Anordnung aus einer Viertelwellenlängenplatte, einer Halbwellenlängenplatte und einer weiteren Viertelwellenlängenplatte, bei welcher durch Verdrehen der Platten gegeneinander die Phasendifferenz zwischen Referenzpfad und des Objektpfad variierbar ist.

Es ist wie oben ausgeführt davon auszugehen, dass nicht für alle Anwendungen die exakte Bewegungsrichtung und/oder der exakte Betrag der Geschwindigkeit des Prüflings in der Bewegungsrichtung als bekannt und damit als vorgegeben vorausgesetzt werden kann. Auch eine Iteration der Änderung der Weglängendifferenz durch die Kompensationseinrichtung ist nicht in allen Ausführungsformen zweckmäßig.

Daher weist die Vorrichtung weiterhin eine Messeinrichtung auf, die derart eingerichtet und ausgestaltet ist, dass die Messeinrichtung in einem Betrieb der Vorrichtung ein Maß für den Betrag der Geschwindigkeit der Oberfläche des Prüflings in der Richtung parallel zu dem Sensitivitätsvektor erfasst, wobei die Steuereinrichtung derart wirksam mit der Messeinrichtung verbunden ist, dass die Steuereinrichtung in einem Betrieb der Vorrichtung ein Messsignal von der Messeinrichtung erhält, welches das erfasste Maß für den Betrag der Geschwindigkeit der Oberfläche des Prüflings in der Richtung parallel zu dem Sensitivitätsvektor umfasst, wobei die Steuereinrichtung derart eingerichtet und ausgestaltet ist, dass die Steuereinrichtung in dem Betrieb der Vorrichtung aus dem Maß für den Betrag der Geschwindigkeit der Oberfläche des Prüflings in der Richtung parallel zu dem Sensitivitätsvektor die einzustellende Weglängendifferenz bestimmt, um eine durch die Geschwindigkeit des Prüflings in der Richtung parallel zu dem Sensitivitätsvektor bewirkte Phasenänderung zu kompensieren.

Grundsätzlich kann das Maß für den Betrag der Geschwindigkeit der Oberfläche des Prüflings in der Richtung parallel zu dem Sensitivitätsvektor, welches von der Messeinrichtung erfasst wird, verschiedene Parameter der Bewegung des Prüflings umfassen. Als Maß für den Betrag der Geschwindigkeit des Prüflings in der Richtung parallel zu dem Sensitivitätsvektor wird erfindungsgemäß die Bewegungsrichtung der Oberfläche des Prüflings sowie der Betrag der Geschwindigkeit in der Bewegungsrichtung erfasst. Aus diesen beiden Parametern bestimmt die Steuereinrichtung dann den Betrag der Geschwindigkeit der Oberfläche in der Richtung parallel zu dem Sensitivitätsvektor.

In einer weiteren Ausführungsform ist die Messeinrichtung derart eingerichtet und ausgestaltet, dass sie in dem Betrieb der Vorrichtung nur die Bewegungsrichtung der Oberfläche des Prüflings relativ zum Sensitivitätsvektor als Maß für den Betrag der Geschwindigkeit der Oberfläche in der Richtung parallel zum Sensitivitätsvektor erfasst, während der Betrag der Geschwindigkeit in der Bewegungsrichtung bekannt ist. Dabei ist die Steuereinrichtung derart eingerichtet und ausgestaltet, dass die Steuereinrichtung in dem Betrieb der Vorrichtung aus der erfassten Bewegungsrichtung der Oberfläche des Prüflings und dem vorbekannten Betrag der Geschwindigkeit in der Bewegungsrichtung den Betrag der Geschwindigkeit des Prüflings in der Richtung parallel zu dem Sensitivitätsvektor bestimmt.

Ein solches Szenario ist bspw. in Produktionsanlagen realistisch, welche den Prüfling mit einer hohen Geschwindigkeit bewegen, der Betrag der Geschwindigkeit sehr präzise bekannt ist und an die Steuereinrichtung übergeben werden kann, während es im Hinblick auf die Bewegungsrichtung des Prüflings relativ zum Sensitivitätsvektor zu Abweichungen von der Soll-Richtung kommen kann, die dann mit der Messeinrichtung erfasst wird.

In einer alternativen Ausführungsform ist die Messeinrichtung derart eingerichtet und ausgestaltet, dass sie in dem Betrieb der Vorrichtung nur den Betrag der Geschwindigkeit der Oberfläche des Prüflings in der Bewegungsrichtung als Maß für den Betrag der Geschwindigkeit der Oberfläche in der Richtung parallel zum Sensitivitätsvektor erfasst. Es versteht sich, dass in einer solchen Ausführungsform der Erfindung die Bewegungsrichtung der Oberfläche des Prüflings vorgegeben und bekannt sein muss. Dabei ist die Steuereinrichtung derart eingerichtet und ausgestaltet, dass die Steuereinrichtung in dem Betrieb der Vorrichtung aus dem erfassten Betrag der Geschwindigkeit der Oberfläche des Prüflings in der Bewegungsrichtung und der vorbekannten Bewegungsrichtung den Betrag der Geschwindigkeit des Prüflings in der Richtung parallel zu dem Sensitivitätsvektor bestimmt.

Erfindungsgemäß wird die Messeinrichtung von dem Interferometer selbst gebildet, wobei zumindest der Interferenzkontrast des erfassten Interferenzmusters ein Maß für die Bewegungsrichtung oder für den Betrag der Geschwindigkeit in der Bewegungsrichtung bildet oder eine räumliche Periodizität eines Interferenzmusters bei der Überlagerung der elektromagnetischen Strahlung des Referenzpfads und des Objektpfads ein Maß für die Bewegungsrichtung oder für den Betrag der Geschwindigkeit in der Bewegungsrichtung bildet. Der Interferenzkontrast bildet damit auch das Maß für den Betrag der Geschwindigkeit der Oberfläche des Prüflings in der Richtung parallel zum Sensitivitätsvektor im Sinne der vorliegenden Anmeldung.

Aus dem Interferenzkontrast lassen sich bei bekannter Bewegungsrichtung relativ zum Sensitivitätsvektor der Betrag der Geschwindigkeit in der Bewegungsrichtung und damit der Betrag der Geschwindigkeit in der Richtung parallel zum Sensitivitätsvektor bestimmen. Ist alternativ der Betrag der Geschwindigkeit in der Bewegungsrichtung bekannt, so lässt sich aus dem Interferenzkontrast die Bewegungsrichtung und damit wiederum der Betrag der Geschwindigkeit in der Richtung parallel zum Sensitivitätsvektor bestimmen.

Die Bestimmung des Interferenzkontrasts und die Ableitung des Betrags der Geschwindigkeit in der Bewegungsrichtung oder alternativ der Bewegungsrichtung aus dem Interferenzkontrast ist auch dann möglich, wenn die Kompensationseinrichtung bereits arbeitet, d. h. die Bewegung des Prüflings kompensiert. In diesem Fall wird aus dem Interferenzkontrast nur der noch nicht kompensierte Anteil des Betrags der Geschwindigkeit in Richtung des Sensitivitätsvektors bestimmt und die Kompensation daraufhin angepasst. In einer Ausführungsform der Erfindung kann auf diese Weise eine geschlossene Regelschleife für die Kompensation bereitgestellt werden.

Für eine Bewegungsrichtung senkrecht zu dem Sensitivitätsvektor ist der Interferenzkontrast maximal. Er nimmt dann schnell ab, je größer die Komponente der Geschwindigkeit in der Richtung parallel zum Sensitivitätsvektor wird. Die Erfassung des Interferenzkontrasts und die Ableitung der Bewegungsrichtung oder des Betrags der Geschwindigkeit in der Bewegungsrichtung aus dem Interferenzkontrast weist daher den Vorteil auf, dass sehr geringe Richtungsänderungen erfasst werden können.

Die Intensität in jedem Punkt des Interferogramms auf dem Detektor bzw. der Kamera des Interferometers ergibt sich aus einer Überlagerung der Wellen der elektromagnetischen Strahlung aus dem Objektpfad und dem Referenzpfad und hängt von deren Amplituden $A_{\text{ref}}$ und $A_{\text{obj}}$ sowie von der Phasendifferenz $\varphi$ zwischen beiden ab

$$I = |A_{\text{ref}}|^2 + |A_{\text{ref}}|^2 + 2\mathcal{R}\left[A_{\text{ref}}^* A_{\text{obj}} \exp(-i\varphi)\right]$$

Durch Phasenschiebealgorithmen hat nach der Auswertung jeder Punkt einen komplexen Wert $A\exp(-i\varphi)$ mit der Phasendifferenz $\varphi$ und der Amplitude $A$. Die Amplitude $A$ ist ein Maß für die Datenqualität: je größer die Amplitude desto höher die maximale Auflösung bei einer Höhen-, abstands- oder Verformungsmessung. Kommt beispielsweise wenig Licht von dem Prüfling zur Kamera, so ist die Amplitude kleiner (z.B. bei stark geneigten Flächen). Die mittlere Amplitude, während der Belichtungszeit $t_b$ entspricht dem Interferenzkontrast , dieser berechnet sich aus

$$\left| \frac{1}{t_b} \int_{-t_b/2}^{t_b/2} A\exp(-i\varphi)dt \right|$$

Bewegt sich nun der Prüfling mit konstanter Geschwindigkeit v, so wird eine zusätzliche Phasendifferenz $\Delta\varphi$ durch die Bewegung eingefügt, nämlich

$$\Delta\varphi = \frac{2\pi}{\lambda} v t_b (\sin\delta_1 + \sin\delta_2)$$

wobei $\lambda$ die Wellenlänge ist, und $\delta_1$, $\delta_2$ die Winkeln zwischen dem Geschwindigkeitsvektor und der einfallenden Strahlung bzw. zwischen Geschwindigkeitsvektor und der reflektierten oder gestreuten Strahlung in dem Objektpfad sind.

Der Interferenzkontrast eines Pixels ergibt sich folglich durch Mittelung des Interferenzterms während der Belichtungszeit $t_b$ zu

$$\left| \frac{A}{t_b} \int_{-t_b/2}^{t_b/2} \exp(-i\varphi + \Delta\varphi)dt \right| = \left| A sinc\left[ \frac{\pi}{\lambda} v t_b (\sin\delta_1 + sin\delta_2) \right] \right|$$

Wenn der Sensitivitätsvektor senkrecht auf dem Vektor der Bewegungsrichtung steht, so gilt $\delta_1 = -\delta_2$. Damit

ist das sinc-Argument gleich 0 und es ergibt sich ein geschwindigkeitsunabhängiger Kontrast. Für alle anderen Anordnungen ist der Interferenzkontrast abhängig von der Geschwindigkeit und wird mit höherer Geschwindigkeit geringer.

Ebenso wird der Interferenzkontrast geringer mit zunehmendem Winkel zwischen der Bewegungsrichtung und der Normalen zu dem Sensitivitätsvektor. Bei diffusen Objekten kommt hinzu, dass eine Winkelschar des gestreuten Strahls auf die Kamera trifft, diese wird durch die Apertur in dem System begrenzt. Dabei ist die Apertur des Systems diejenige Apertur, welche effektiv die Winkelschar der auf den Detektor treffende Strahlung begrenzt. D.h. der Interferenzkontrast ist (solange die Specklegröße kleiner ist als die Bewegungsunschärfe) gegeben durch:

$$\left|\frac{A_0}{2\alpha}\int_{-\alpha}^{\alpha} sinc[\frac{\pi}{\lambda} vt_b(\sin\delta_1 + \sin\delta_2)]d\delta_2\right|$$

wobei $\alpha$ hier der Öffnungswinkel der Apertur des Systems ist.

Zudem ermöglicht es die vorliegende Erfindung, Messungen mit einer höheren Dynamik durchzuführen. Prüflinge, welche die elektromagnetische Strahlung diffus an der zu erfassenden Oberfläche streuen werden häufig durch Reflexe der elektromagnetischen Strahlung, bspw. vom Strahlteiler des Interferometers, gestört, welche dann die eigentliche zu erfassende Strahlung überstrahlen. Derartige Artefakte werden herausgefiltert, da sie keine durch die Kompensationseinrichtung aufgeprägte Modulation aufweisen.

In einer Ausführungsform der Erfindung ist die Steuereinrichtung derart eingerichtet und ausgestaltet, dass sie die Kompensationseinrichtung so steuert, dass die räumliche Periodizität des Interferenzmusters einen definierten, vorbestimmten Sollwert annimmt.

Sowohl für das Bestimmen des Interferenzkontrasts des Interferenzmusters als auch für das Bestimmen der räumlichen Periodizität des Interferenzmusters kann man sich in einer Ausführungsform der Erfindung, , dem im Folgenden geschilderten Verfahren bedienen.

In einer Ausführungsform der Erfindung beruht die Auswertung des von einer Kamera als Detektor aufgenommenen Interferenzmusters auf einem räumlichen Phasenschieben sowie einer Filterung des Interferenzmusters im Fourier-Raum, so wie sie für nicht bewegte Objekte in M. Takeda et al. "Fourier-transform method of fringe-patten analysis for computer-based tomography and interferometry" J. Opt. Soc. Am. 72, Seiten 156 bis 160 (1982) beschrieben sind.

Zur Realisierung dieser Ausführungsform sind die optischen Achsen des Objektstrahls und des Referenzstrahls bei ihrer Überlagerung auf der Kamera gegeneinander verkippt, sodass sie einen Winkel einschließen. Dies führt zu einem Variieren der Phasendifferenz zwischen Objektstrahl und Referenzstrahl über das Interferenzmuster hinweg (räumliches Phasenschieben). Im (räumlichen) Frequenzraum betrachtet führt die räumliche Variation der Phasendifferenz zu einer verglichen mit den Objektfrequenzen hochfrequenten Modulation des Interferogramms mit einer durch den Winkel zwischen Objektstrahl und Referenzstrahl vorgegebenen räumlichen Modulationsfrequenz $f_0$.

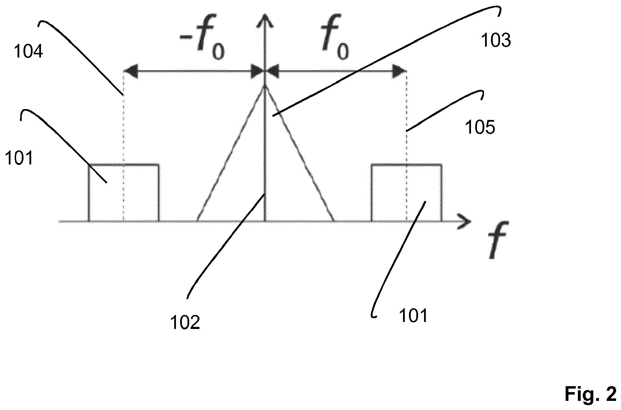

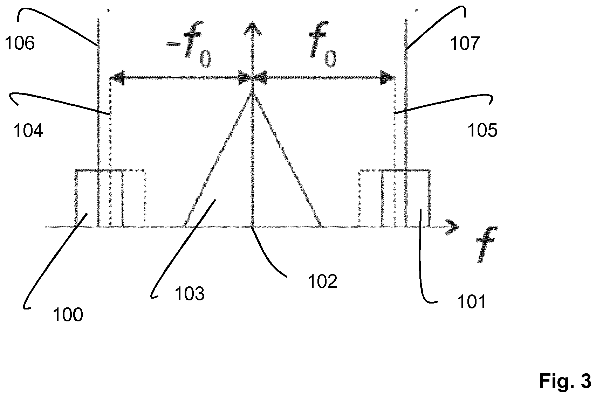

Für die Analyse wird das von der Kamera aufgenommene Interferenzmuster einer Fourier-Transformation unterzogen und das Fourier-Spektrum des Interferenzmusters ausgewertet. Zur Erläuterung dieser Auswertung wird im Folgenden auf die schematischen Fourier-Spektren der Figuren 2 und 3 Bezug genommen, in denen die Amplitude gegen die Frequenz aufgetragen ist. Betrachtet man das Fourier-Spektrum des Interferenzmusters aus Figur 2, so sieht man die +/- 1. Beugungsordnung 100, 101 (Bereiche mit einer über einen Frequenzbereich hinweg im Wesentlichen konstanter Amplitude), welche gegenüber dem Ursprung 102 des Spektrums um $\pm f_0$ verschoben sind. Die Breite dieser rechteckigen Bereiche 100, 101 ist durch die Blendenöffnung des Systems gegeben.

Um den Ursprung 102 herum findet sich die 0. Beugungsordnung 103. Dieser Bereich wird von den Ortsfrequenzen des Objekts, d.h. der vermessenen Oberfläche des Prüflings bestimmt. Um die +/- 1. Beugungsordnung 100, 101 von der 0. Beugungsordnung 103 im Fourier-Spektrum trennen zu können, wird die Apertur des Systems, welche die Kamera effektiv sieht, so klein gewählt, dass die Ortsfrequenzen der Oberfläche des Prüflings beugungsbegrenzt und daher klein sind. Auf diese Weise sind die Bereiche der 0. Beugungsordnung und der +/- 1. Beugungsordnung klar getrennt.. Damit ist eine mittlere Specklegröße vorgegeben sowie eine maximale laterale Auflösung.

Helligkeitsschwankungen im Objekt können nun von den interferenzbedingten Helligkeitsschwankungen getrennt werden. Wird entweder die + 1. oder die - 1. Beugungsordnung 100, 101 der Blende aus dem Fourier-Spektrum ausgeschnitten und in den Ursprung 102 verschoben, so dass das Spektrum der + 1. oder - 1. Beugungsordnung symmetrisch zum Ursprung 102 ist. Das Ausschneiden kommt einer Hochpassfilterung gleich. Nach der Filterung sind im Spektrum nur noch Helligkeitsschwankungen vorhanden, die durch die Interferenz entstanden sind. Diese enthalten die Information über die Phasendifferenz zwischen dem Objektstrahl und dem Referenzstrahl, aus welcher sich die Form der Oberfläche bestimmen lässt. Dieser Teil des Spektrums bildet für die Ausführungsformen der vorliegenden Erfindung die Messgröße.

Der in den Ursprung 102 verschobene Teil des Spektrums wird dann einer Fourier-Transformation zurück in den Ortsraum unterzogen. Das Ergebnis dieser Rücktransformation ist aufgrund der im Fourier-Raum vorgenommenen Filterung ein komplexwertiges Bild. Der Betrag der komplexen Zahl an jedem Ort entspricht dem Interferenzkontrast an dem jeweiligen Ort, das Argument der komplexen Zahl an jedem Ort entspricht der Objektphase an dem jeweiligen Ort.

Der Betrag der komplexen Zahl an jedem Ort kann nun zur Auswertung des Interferenzkontrasts verwendet werden, so wie sie zuvor beschrieben wurde.

Wird die Oberfläche des Prüflings mit einer Komponente der Bewegungsrichtung, welche nicht senkrecht zum Sensitivitätsvektor ist, bewegt, so erhält man kein aussagekräftiges Signal, das zuvor beschriebene räumliche Phasenschieben funktioniert nicht. Erst die Kompensation der Bewegungskomponente parallel zum Sensitivitätsvektor, so wie sie in Ausführungsformen davon in der vorliegenden Anmeldung beschrieben wird, ermöglicht das zuvor beschriebene Auswerteverfahren mit Hilfe des räumlichen Phasenschiebens und der Filterung im Fourier-Raum.

Wird die Geschwindigkeit der Bewegung der Oberfläche parallel zum Sensitivitätsvektor nur unvollständig kompensiert, so verschiebt sich der Schwerpunkt 104, 105 der $\pm$ 1. Beugungsordnungen im Fourier-Raum weg von der eigentlichen Modulationsfrequenz $f_0$. Diese Verschiebung des Schwerpunkts 104, 105 ist in Figur 3 dargestellt.

Aus der Lage des verschobenen Schwerpunkts 106, 107 der rechteckigen Fourier-Abbildungen der Blende kann nun eine Fehleinstellung der Kompensation, d.h. der nichtkompensierte Anteil der Geschwindigkeit der Oberfläche des Prüflings parallel zum Sensitivitätsvektor bestimmt werden. Das Vorzeichen der Verschiebung des Schwerpunkts 106, 107 gegenüber dem Schwerpunkt 104, 105 bei vollständiger Kompensation wird ebenfalls bestimmt. Sowohl eine Über- als auch eine Unterkompensation (diese führen zu den unterschiedlichen Vorzeichen der Verschiebung des Schwerpunkts) führen zu einer Verringerung des Kontrasts.

Ist der Betrag der Geschwindigkeit der Oberfläche des Prüflings in der Bewegungsrichtung oder die Bewegungsrichtung bekannt, so kann aus der Verschiebung des Schwerpunkts 106, 107 der +1. oder -1. Beugungsordnung gegenüber dem Schwerpunkt 104, 105 bei perfekter Kompensation die jeweils andere Größe bestimmt werden.

Eine Ausführungsform, bei welcher die Messeinrichtung von dem Interferometer selbst gebildet wird, kann auch dazu verwendet werden, den Sensitivitätsvektor relativ zur Bewegungsrichtung der Oberfläche des Prüflings zu justieren. Darüber hinaus lässt sich mit einer solchen Ausführungsform die Kompensationseinrichtung, insbesondere ein Piezo-Aktuator zum Bewegen eines Reflektors, charakterisieren.

Soweit zuvor Aspekte der Erfindung in Hinblick auf die Vorrichtung zur interferometrischen Vermessung einer Oberfläche eines bewegten Prüflings beschrieben wurden, so gelten diese auch für das entsprechende Verfahren zur interferometrischen Vermessung der Oberfläche des bewegten Prüflings und umgekehrt. Insbesondere sind Ausführungsformen der Vorrichtung zu dem Ausführen der nachfolgend beschriebenen Ausführungsformen des Verfahrens geeignet.

Zumindest eine der oben genannten Aufgaben wird auch durch ein Verfahren zur interferometrischen Vermessung einer Oberfläche eines bewegten Prüflings gelöst mit den Schritten Aufteilen von elektromagnetischer Strahlung in einem Interferometer auf einen Objektpfad und einen Referenzpfad, Anordnen des Prüflings in dem Objektpfad, wobei eine Winkelhalbierende zwischen einem die Oberfläche des Prüflings beleuchtenden Strahl des Objektpfads und der Beobachtungsrichtung einen Sensitivitätsvektor definiert, Vermessen einer Form der Oberfläche des Prüflings, Bestimmen einer einzustellenden Weglängendifferenz aus einer Geschwindigkeit des Prüflings in einer Richtung parallel zu dem Sensitivitätsvektor und Kompensieren einer durch die Geschwindigkeit des Prüflings in der Richtung parallel zu dem Sensitivitätsvektor bewirkten Phasenänderung durch Ändern einer optische Weglängendifferenz zwischen dem Objektpfad und dem Referenzpfad des Interferometers mit Hilfe einer Kompensationseinrichtung.

Soweit das Verfahren mit der Vorrichtung gemäß dieser Erfindung ausgeführt wird, so weist diese die entsprechenden Einrichtungen hierfür auf.

In einer weiteren Ausführungsform der Erfindung wird zum Bestimmen der Phasenlage und damit der Höhe der Oberfläche die Phasendifferenz zwischen der elektromagnetischen Strahlung des Objektpfads und des Referenzpfads zeitlich variiert. Dabei wird in einer Ausführungsform der Erfindung für mindestens drei voneinander verschiedene diskrete Phasendifferenzen zwischen der elektromagnetischen Strahlung in dem Objektpfad und der elektromagnetischen Strahlung in dem Referenzpfad jeweils eine Intensität an einem einzigen Ort eines Interferenzmusters gemessen und aus diesen mindestens drei Messungen die Höhe der Oberfläche bestimmt, wobei während jeder der Messungen die durch die Geschwindigkeit der Oberfläche des Prüflings in der Richtung parallel zu dem Sensitivitätsvektor bewirkte Phasenänderung mit Hilfe der Kompensationseinrichtung kompensiert wird.

In einer weiteren Ausführungsform der Erfindung variiert zum Bestimmen der Phasenlage und damit der Höhe der Oberfläche die Phasendifferenz zwischen der elektromagnetischen Strahlung des Objektpfads und des Referenzpfads räumlich über das Interferenzmuster hinweg. Dabei wird in einer Ausführungsform bei einer Anordnung, bei welcher der Objektpfad und der Referenzpfad bei der Überlagerung, d.h. insbesondere auf dem Detektor, einen von Null verschiedenen Winkel einschließen, die Intensität eines Interferenzmusters an mindestens drei Orten des Interferenzmusters gemessen wird und aus diesen mindestens drei Messungen die Höhe der Oberfläche bestimmt wird, wobei während der Messungen die durch die Geschwindigkeit der Oberfläche des Prüflings in der Richtung parallel zu dem Sensitivitätsvektor bewirkte Phasenänderung mit Hilfe der Kompensationseinrichtung kompensiert wird. Es versteht sich, dass ein solches "räumliches Phasenschieben" den Vorteil aufweist, dass mit einer einzigen Messung die Phasendifferenz hinreichend genau bestimmt werden kann. Dabei werden mindestens drei Orte in dem Interferenzmuster zum Bestimmen der Phasenlage ausgewertet. Im Falle von Speckle-Interferometrie liegen diese drei Orte notwendigerweise in einem Speckle des Interferenzmusters.

Weitere Vorteile, Merkmale und Anwendungsmöglichkeiten der vorliegenden Erfindung werden anhand der folgenden Beschreibung einer Ausführungsform und der dazugehörigen Figuren deutlich.

Figur 1     ist eine schematische Darstellung einer Vorrichtung zur interferometrischen Vermessung einer Oberfläche eines bewegten Prüflings gemäß einer Ausführungsform der vorliegenden Erfindung.

Figur 2     ist eine schematische Darstellung eines räumlichen Fourier-Spektrums eines Interferenzmusters mit Kompensation der Bewegung des Prüflings.

Figur 3     ist eine schematische Darstellung des räumlichen Fourier-Spektrums des Interferenzmusters aus Figur 2 mit teilweiser Kompensation der Bewegung des Prüflings.

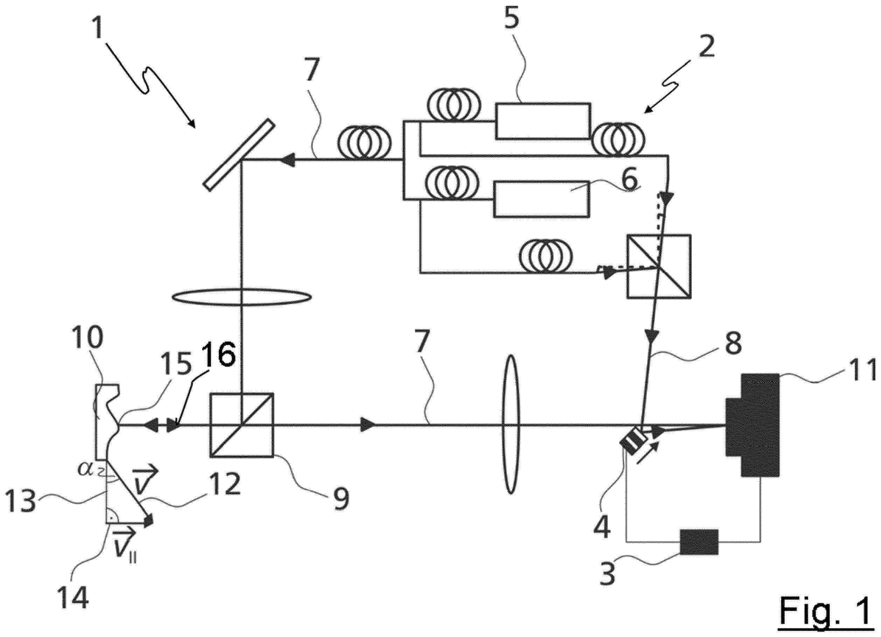

Die erfindungsgemäße Vorrichtung 1, so wie sie in Figur 1 schematisch dargestellt ist, besteht aus drei wesentlichen Komponenten, nämlich einem Interferometer 2, welches im Detail nachstehend beschrieben wird, einer Steuereinrichtung 3 in Form eines Rechners und einer Kompensationseinrichtung 4 in Form eines Piezoaktors mit einem darauf angeordneten Spiegel.

Bei dem Interferometer 2 handelt es sich um ein Zweiwellenlängeninterferometer, wobei die notwendige elektromagnetische Strahlung mit Hilfe zweier Laser 5, 6 mit zwei verschiedenen Wellenlängen erzeugt wird. Die Laser 5, 6 bilden eine Quelle für die elektromagnetische Strahlung im Sinne der vorliegenden Anmeldung. Diese Quelle 5, 6 erzeugt elektromagnetisches Strahlung mit zwei verschiedenen Wellenlängen für einen Betrieb des Interferometers 2 als Mehrwellenlängen-Speckle-Interferometer.

Die Ausgänge der beiden Laser 5, 6 werden mit Hilfe einer Faserkopplung räumlich überlagert und bilden dann zum einen die elektromagnetische Strahlung für den Objektpfad 7 und zum anderen die elektromagnetische Strahlung für den Referenzpfad 8. Die Strahlung des Objektpfads 7 wird mithilfe eines Strahlteilerwürfels 9 auf den Prüfling 10 geleitet. Die vom Prüfling 10 zurück reflektierte oder gestreute Strahlung wird durch den Strahlteiler 9 transmittiert und auf einer Kamera 11 räumlich mit der Strahlung aus dem Referenzpfad 8 überlagert.

In der dargestellten Ausführungsform ist das Interferometer 2 für senkrechten Einfall der Strahlung auf die Oberfläche 15 des Prüflings 10, ausgelegt. Der Sensitivitätsvektor, die die Oberfläche 15 beleuchtende Strahlung 16 und die Beobachtungsrichtung 16 fallen daher zusammen. Der Geschwindigkeitsvektor 12 in der Bewegungsrichtung des Objekts und damit seiner Oberfläche 15 ist mit dem $\vec{v}$ bezeichnet. Die Bewegung, welche durch den Geschwindigkeitsvektor 12 beschrieben wird, lässt sich in eine Komponente parallel zu dem Sensitivitätsvektor, diese ist in Figur 1 mit dem Bezugszeichen 14 und dem Symbol $\vec{v}_\parallel$ bezeichnet, und eine Komponente senkrecht zu dem Sensitivitätsvektor, diese ist in Figur 1 mit dem Bezugszeichen 13 bezeichnet, zerlegen. Entscheidend für die Kompensation der Bewegung des Prüflings 10 in einer beliebigen Bewegungsrichtung entsprechend dem Geschwindigkeitsvektor 12 ist nur die Bewegungskomponente 14 parallel zu dem Sensitivitätsvektor. Diese führt nämlich zu einer effektiven Weglängenänderung der elektromagnetischen Strahlung in dem Objektpfad 7. Diese Weglängenänderung gilt es mit Hilfe der Kompensationseinrichtung 4 in dem Referenzpfad 8 zu kompensieren.

Für die dargestellte Ausführungsform wird davon ausgegangen, dass der Betrag des Geschwindigkeitsvektors 12 in der Bewegungsrichtung des Prüflings 10 sehr präzise bekannt ist, da sie beispielsweise durch eine Produktionsanlage sehr genau vorgegeben ist. Allerdings gilt es, um die Geschwindigkeitskomponente 14 parallel zu dem Sensitivitätsvektor zu kompensieren, die Richtung des Geschwindigkeitsvektors 12 in Bewegungsrichtung zu bestimmen. Für diese Bestimmung der Richtung wird in der dargestellten Ausführungsform der Vorrichtung 1 das Interferometer 2 selbst verwendet. Dieses bildet dann in dieser Ausführungsform die Messeinrichtung zu dem Erfassen eines Maßes für die Geschwindigkeit des Prüflings in der Richtung parallel zu dem Sensitivitätsvektor in dem Sinne des Sprachgebrauchs der vorliegenden Anmeldung. Der Piezoaktor 4 muss den darauf montierten Spiegel dann so bewegen, dass die dadurch bewirkte Weglängenänderung in dem Referenzpfad 8 gleich schnell erfolgt wie die Weglängenänderung in dem Objektpfad 7.

Zur Bestimmung der Bewegungsrichtung des Prüflings 10 wird der Interferenzkontrast des Interferenzmusters auf der Kamera 11 des Interferometers 2 ausgewertet, so wie es oben beschrieben wurde.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

**Bezugszeichenliste**

| | |
|---|---|
| 1 | Vorrichtung zur interferometrischen Vermessung einer Oberfläche |
| 2 | Interferometer |
| 3 | Rechner (Steuereinrichtung) |
| 4 | Piezoaktor mit Spiegel (Kompensationseinrichtung) |
| 5, 6 | Laser |
| 7 | Objektpfad |
| 8 | Referenzpfad |
| 9 | Strahlteilerwürfel |
| 10 | Prüfling |
| 11 | Kamera |
| 12 | Geschwindigkeitsvektor in Bewegungsrichtung |
| 13 | Geschwindigkeitskomponente in einer Richtung senkrecht zu dem Sensitivitätsvektor |
| 14 | Geschwindigkeitskomponente in einer Richtung parallel zu dem Sensitivitätsvektor |
| 15 | zu vermessende Oberfläche des Prüflings 10 |
| 16 | beleuchtende Strahlung, die Beobachtungsrichtung und Richtung des Sensitivitätsvektors |

**Patentansprüche**

1.  Vorrichtung (1) zur interferometrischen Vermessung einer Oberfläche (15) eines bewegten Prüflings (10) mit

    einem Interferometer (2), das einen Objektpfad (7) und einen Referenzpfad (8) aufweist,

        wobei das Interferometer (2) derart ausgestaltet und eingerichtet ist, dass eine Form der Oberfläche (15) des Prüflings (10) vermessbar ist, und
        wobei eine Winkelhalbierende zwischen einem die Oberfläche (15) des Prüflings (10) beleuchtenden Strahl (16) des Objektspfads (7) und einer Beobachtungsrichtung des Objektpfads (7) einen Sensitivitätsvektor definiert,

    einer Kompensationseinrichtung (4), die derart ausgestaltet und eingerichtet ist, dass mit der Kompensationseinrichtung (4) eine optische Weglängendifferenz zwischen dem Objektpfad (7) und dem Referenzpfad (8) des Interferometers (2) veränderbar einstellbar ist, einer Messeinrichtung (2), die derart eingerichtet und ausgestaltet ist, dass die Messeinrichtung (2) in dem Betrieb der Vorrichtung (1) eine Bewegungsrichtung (12) der Oberfläche (15) des Prüflings (10) und/oder den Betrag der Geschwindigkeit der Oberfläche (15) des Prüflings (10) in der Bewegungsrichtung (12) als ein Maß für den Betrag der Geschwindigkeit (14) der Oberfläche des Prüflings (10) in der Richtung parallel zu dem Sensitivitätsvektor erfasst, einer Steuereinrichtung (3),

        wobei die Steuereinrichtung (3) derart wirksam mit der Kompensationseinrichtung (4) verbunden ist, dass die Weglängendifferenz zwischen dem Objektpfad (7) und dem Referenzpfad (8) einstellbar steuerbar ist, wobei die Steuereinrichtung (3) derart wirksam mit der Messeinrichtung (2) verbunden ist, dass die Steuereinrichtung (3) in dem Betrieb der Vorrichtung ein Messsignal von der Messeinrichtung (2) erhält, das

EP 3 581 879 B1

das Maß für den Betrag der Geschwindigkeit (14) der Oberfläche des Prüflings in der Richtung parallel zu dem Sensitivitätsvektor umfasst,

wobei die Steuereinrichtung (3) derart eingerichtet und ausgestaltet ist, dass die Steuereinrichtung (3) in einem Betrieb der Vorrichtung (1) die Kompensationseinrichtung (4) so steuert, dass eine durch die Kompensationseinrichtung (4) bewirkte Änderung der Weglängendifferenz zwischen dem Objektpfad (7) und dem Referenzpfad (8) gleich einer aus einer Geschwindigkeit (14) der Oberfläche (15) des Prüflings (10) in einer Richtung parallel zu dem Sensitivitätsvektor resultierenden Änderung der Weglängendifferenz zwischen dem Objektpfad (7) und dem Referenzpfad (8) ist, um die durch die Geschwindigkeit der Oberfläche (15) des Prüflings (10) in der Richtung parallel zu dem Sensitivitätsvektor bewirkte Phasenänderung zu kompensieren, und

wobei die Steuereinrichtung (3) derart eingerichtet und ausgestaltet ist,

dass die Steuereinrichtung (3) in dem Betrieb der Vorrichtung (1) aus der erfassten Bewegungsrichtung (12) der Oberfläche (15) des Prüflings (10) und/oder dem erfassten Betrag der Geschwindigkeit in der Bewegungsrichtung den Betrag der Geschwindigkeit der Oberfläche (15) des Prüflings (10) in der Richtung parallel zu dem Sensitivitätsvektor bestimmt, und dass die Steuereinrichtung (3) in dem Betrieb der Vorrichtung (1) aus dem Betrag der Geschwindigkeit (14) der Oberfläche (15) des Prüflings (10) parallel zu dem Sensitivitätsvektor die einzustellende Weglängendifferenz bestimmt,

**dadurch gekennzeichnet, dass**

die Messeinrichtung von dem Interferometer (2) gebildet ist, wobei zumindest eine räumliche Periodizität eines Interferenzmusters ein Maß für die Bewegungsrichtung (12) der Oberfläche (15) des Prüflings (10) oder für den Betrag der Geschwindigkeit in der Bewegungsrichtung bildet oder der Interferenzkontrast eines Interferenzmusters das Maß für die Bewegungsrichtung (12) der Oberfläche (15) des Prüflings (10) oder für den Betrag der Geschwindigkeit in der Bewegungsrichtung bildet.

2. Vorrichtung (1) nach dem vorhergehenden Anspruch, **dadurch gekennzeichnet, dass** die Steuereinrichtung (3) zusätzlich derart eingerichtet und ausgestaltet ist, dass die Steuereinrichtung (3) in einem Betrieb der Vorrichtung (1) aus dem vorbekannten Betrag der Geschwindigkeit (14) der Oberfläche (15) des Prüflings (10) in der Richtung parallel zu dem Sensitivitätsvektor die von der Kompensationseinrichtung (4) zu bewirkende Änderung der Weglängendifferenz zwischen dem Objektpfad (7) und dem Referenzpfad (8) bestimmt.

3. Vorrichtung (1) nach einem der vorhergehenden Ansprüche, **dadurch gekennzeichnet, dass** das Interferometer (2) ein Speckle-Interferometer ist.

4. Vorrichtung (1) nach einem der vorhergehenden Ansprüche, **dadurch gekennzeichnet, dass** das Interferometer (2) ein Mehrwellenlängeninterferometer ist.

5. Vorrichtung (1) nach einem der vorhergehenden Ansprüche, **dadurch gekennzeichnet, dass** die Kompensationseinrichtung (4) derart eingerichtet ist, dass sie in dem Betrieb der Vorrichtung (1) die optische Weglänge der Objektpfads (7) und/oder des Referenzpfads (8) ändert.

6. Vorrichtung (1) nach einem der vorhergehenden Ansprüche, **dadurch gekennzeichnet, dass** die Steuereinrichtung (3) und/oder die Kompensationseinrichtung (4) derart eingerichtet sind, dass die Kompensationseinrichtung (4) eine Änderung der Weglängendifferenz zwischen dem Objektpfad (7) und dem Referenzpfad (8) von einem vorgegebenen Vielfachen der Wellenlänge bewirkt, nach Erreichen einer Änderung der Weglängendifferenz von $n\lambda$, wobei n eine ganze Zahl und $\lambda$ die Wellenlänge der verwendeten elektromagnetischen Strahlung ist, zu einer anfänglichen Weglängendifferenz zurückkehrt und erneut eine Änderung der Weglängendifferenz von maximal $n\lambda$ bewirkt, bis das vorgegebene Vielfache der Wellenlänge erreicht ist.

7. Verfahren zur interferometrischen Vermessung einer Oberfläche (15) eines bewegten Prüflings (10) mit den Schritten

Aufteilen von elektromagnetischer Strahlung in einem Interferometer (2) auf einen Objektpfad (7) und einen Referenzpfad (8),

Anordnen des Prüflings (10) in dem Objektpfad (7), wobei eine Winkelhalbierende zwischen einem die Oberfläche (15) des Prüflings (10) beleuchtenden Strahl (16) des Objektspfads (7) und einer Beobachtungsrichtung (16) des Objektpfads (7) einen Sensitivitätsvektor definiert,

Vermessen der Form der Oberfläche (15) des Prüflings (10) mit dem Interferometer (2),

Kompensieren einer durch eine Geschwindigkeit der Oberfläche (15) des Prüflings (10) in der Richtung parallel zu dem Sensitivitätsvektor bewirkten Phasenänderung durch Ändern einer optischen Weglängendifferenz zwischen dem Objektpfad (7) und dem Referenzpfad (8) des Interferometers (2) mit Hilfe einer Kompensationseinrichtung (4),

Erfassen einer Bewegungsrichtung (12) der Oberfläche (15) des Prüflings (10) und/oder eines Betrag der Geschwindigkeit der Oberfläche (15) des Prüflings (10) in der Bewegungsrichtung (12) mit einer Messeinrichtung,

Bestimmen des Betrags der Geschwindigkeit der Oberfläche (15) des Prüflings (10) in der Richtung parallel zu dem Sensitivitätsvektor aus der erfassten Bewegungsrichtung (12) der Oberfläche (15) des Prüflings (10) und/oder dem erfassten Betrag der Geschwindigkeit in der Bewegungsrichtung, und

Bestimmen der einzustellende Weglängendifferenz aus dem Betrag der Geschwindigkeit (14) der Oberfläche (15) des Prüflings (10) parallel zu dem Sensitivitätsvektor,

**dadurch gekennzeichnet, dass**

die Messeinrichtung von dem Interferometer (2) gebildet wird, wobei zumindest eine räumliche Periodizität eines Interferenzmusters ein Maß für die Bewegungsrichtung (12) der Oberfläche (15) des Prüflings (10) oder für den Betrag der Geschwindigkeit in der Bewegungsrichtung bildet oder der Interferenzkontrast eines Interferenzmusters das Maß für die Bewegungsrichtung (12) der Oberfläche (15) des Prüflings (10) oder für den Betrag der Geschwindigkeit in der Bewegungsrichtung bildet.

8. Verfahren nach Anspruch 7, **dadurch gekennzeichnet, dass** die Oberfläche (15) des Prüflings (10) während dem Vermessen der Oberfläche (15) eine Translationsbewegung mit konstanter Geschwindigkeit, eine Translationsbewegung mit einer bekannten zeitabhängigen Beschleunigung, eine Drehbewegung mit konstanter Winkelgeschwindigkeit oder eine Drehbewegung mit einer bekannten zeitabhängigen Winkelbeschleunigung erfährt.

9. Verfahren nach Anspruch 8, **dadurch gekennzeichnet, dass** eine Komponente der Geschwindigkeit der Oberfläche (15) des Prüflings (10) in einer Richtung senkrecht zu dem Sensitivitätsvektor mindestens doppelt so groß und vorzugsweise mindestens 10 mal so groß ist wie eine Komponente der Geschwindigkeit der Oberfläche (15) des Prüflings (10) in der Richtung parallel zu dem Sensitivitätsvektor.

10. Verfahren nach einem der Ansprüche 7 bis 9, **dadurch gekennzeichnet, dass** eine Projektion einer Weglänge, um die sich die in dem Objektpfad (7) befindende Oberfläche (15) des Prüflings (10) während einer Integrationszeit eines zum Vermessen der Oberfläche (15) verwendeten Detektors in Richtung des Sensitivitätsvektors bewegt, auf die Richtung des Sensitivitätsvektors gleich der Wellenlänge der elektromagnetischen Strahlung oder größer ist.

11. Verfahren nach einem der Ansprüche 7 bis 10, **dadurch gekennzeichnet, dass** für mindestens drei voneinander verschiedene diskrete Phasendifferenzen zwischen der elektromagnetischen Strahlung in dem Objektpfad (7) und der elektromagnetischen Strahlung in dem Referenzpfad (8) jeweils eine Intensität an einem Ort eines Interferenzmusters gemessen wird und aus diesen mindestens drei Messungen die Höhe der Oberfläche bestimmt wird, wobei während jeder der Messungen die durch die Geschwindigkeit der Oberfläche des Prüflings (10) in der Richtung parallel zu dem Sensitivitätsvektor bewirkte Phasenänderung mit Hilfe der Kompensationseinrichtung (4) kompensiert wird.

12. Verfahren nach einem der Ansprüche 7 bis 11, **dadurch gekennzeichnet, dass** bei einer Anordnung, bei welcher der Objektstrahl (7) und der Referenzstrahl (8) auf dem Detektor (11) einen von Null verschiedenen Winkel einschließen, die Intensität eines Interferenzmusters an drei nebeneinander liegende Orten des Interferenzmusters gemessen wird und aus diesen mindestens drei Messungen die Höhe der Oberfläche (15) bestimmt wird, wobei während der Messungen die durch die Geschwindigkeit der Oberfläche (15) des Prüflings (10) in der Richtung parallel zu dem Sensitivitätsvektor bewirkte Phasenänderung mit Hilfe der Kompensationseinrichtung (4) kompensiert wird.

## Claims

1. A device (1) for interferometric measurement of a surface (15) of a moving device under test (10) comprising

   an interferometer (2) which has an object path (7) and a reference path (8),

   the interferometer (2) being designed and configured in such a way that a shape of the surface (15) of the device under test (10) can be measured, and

wherein a bisector between a beam (16) of the object path (7) illuminating the surface (15) of the device under test (10) and an observation direction of the object path (7) defines a sensitivity vector,

a compensation means (4) which is designed and configured in such a way that an optical path length difference between the object path (7) and the reference path (8) of the interferometer (2) can be variably set with the compensation device (4),

a measuring means (2) which is set up and designed in such a way that, in the operation of the device (1), the measuring means (2) detects a direction of motion (12) of the surface (15) of the device under test (10) and/or the magnitude of the velocity of the surface (15) of the device under test (10) in the direction of motion (12) as a measure of the magnitude of the velocity (14) of the surface of the device under test (10) in the direction parallel to the sensitivity vector,

a control means (3),

wherein the control means (3) is operatively connected to the compensation means (4) in such a way that the path length difference between the object path (7) and the reference path (8) is adjustably controllable,

wherein the control means (3) is operatively connected to the measuring means (2) such that the control means (3) receives in the operation of the apparatus a measurement signal from the measuring means (2) comprising the measure of the magnitude of the velocity (14) of the surface of the device under test in the direction parallel to the sensitivity vector,

wherein the control means (3) is arranged and configured in such a way that the control means (3) controls the compensation means (4) in an operation of the device (1) in such a way that a change in the path length difference between the object path (7) and the reference path (8) caused by the compensation means (4) is equal to a change in the path length difference between the object path (7) and the reference path (8) resulting from a velocity (14) of the surface (15) of the device under test (10) in a direction parallel to the sensitivity vector, to compensate for the phase change caused by the velocity of the surface (15) of the device under test (10) in the direction parallel to the sensitivity vector, and

wherein the control means (3) is arranged and configured such that

that the control means (3) in the operation of the device (1) determines the magnitude of the velocity of the surface (15) of the device under test (10) in the direction parallel to the sensitivity vector from the detected direction of motion (12) of the surface (15) of the device under test (10) and/or the detected measure of the velocity in the direction of motion, and in that the control means (3) in the operation of the device (1) determines the path length difference to be set from the magnitude of the velocity (14) of the surface (15) of the device under test (10) parallel to the sensitivity vector,

**characterised in that**

the measuring means is formed by the interferometer (2), at least a spatial periodicity of an interference pattern forming a measure of the direction of motion (12) of the surface (15) of the device under test (10) or of the magnitude of the velocity in the direction of motion, or the interference contrast of an interference pattern forming the measure of the direction of motion (12) of the surface (15) of the device under test (10) or of the magnitude of the velocity in the direction of motion.

2. The device (1) according to the preceding claim, **characterised in that** the control means (3) is additionally configured and designed in such a way that, during operation of the device (1), the control means (3) determines from the previously known magnitude of the velocity (14) of the surface (15) of the test object (10) in the direction parallel to the sensitivity vector the change in the path length difference between the object path (7) and the reference path (8) to be effected by the compensation means (4).

3. The device (1) according to any one of the preceding claims, **characterized in that** the interferometer (2) is a speckle interferometer.

4. The device (1) according to any one of the preceding claims, **characterised in that** the interferometer (2) is a multi-wavelength interferometer.

5. The device (1) according to any one of the preceding claims, **characterized in that** the compensation means (4) is arranged to change the optical path length of the object path (7) and/or the reference path (8) during operation of the device (1).

6. The device (1) according to one of the preceding claims, **characterised in that** the control means (3) and/or the compensation means (4) are configured in such a way that the compensation means (4) effects a change in the path length difference between the object path (7) and the reference path (8) of a predetermined multiple of the wavelength, after reaching a change in the path length difference of n $\lambda$, wherein n is an integer and $\lambda$ is the wavelength of the electromagnetic radiation used, returns to an initial path length difference and again effects a change in the path length difference of at most n $\lambda$ until the predetermined multiple of the wavelength is reached.

7. A method for interferometrically measuring a surface (15) of a moving device under test (10), comprising the steps of

splitting electromagnetic radiation in an interferometer (2) into an object path (7) and a reference path (8),
arranging the device under test (10) in the object path (7), wherein a bisector between a beam (16) of the object path (7) illuminating the surface (15) of the device under test (10) and an observation direction (16) of the object path (7) defines a sensitivity vector, measuring the shape of the surface (15) of the device under test (10) with the interferometer (2),
compensating a phase change caused by a velocity of the surface (15) of the device under test (10) in the direction parallel to the sensitivity vector by changing an optical path length difference between the object path (7) and the reference path (8) of the interferometer (2) by means of a compensation means (4),
detecting a direction of motion (12) of the surface (15) of the device under test (10) and/or a magnitude of the velocity of the surface (15) of the device under test (10) in the direction of motion (12) with a measuring means,
determining the magnitude of the velocity of the surface (15) of the device under test (10) in the direction parallel to the sensitivity vector from the sensed direction of motion (12) of the surface (15) of the device under test (10) and/or the sensed magnitude of the velocity in the direction of motion, and
determining the path length difference to be set from the magnitude of the velocity (14) of the surface (15) of the device under test (10) parallel to the sensitivity vector,
**characterized in that**
the measuring means is formed by the interferometer (2), at least one spatial periodicity of an interference pattern forming a measure of the direction of motion (12) of the surface (15) of the device under test (10) or of the magnitude of the velocity in the direction of motion, or the interference contrast of an interference pattern forming the measure of the direction of motion (12) of the surface (15) of the device under test (10) or of the magnitude of the velocity in the direction of motion.

8. The method according to claim 7, **characterized in that** the surface (15) of the device under test (10) undergoes a translational motion with constant velocity, a translational motion with a known time-dependent acceleration, a rotational motion with constant angular velocity or a rotational motion with a known time-dependent angular acceleration during the measurement of the surface (15).

9. The method according to claim 8, **characterized in that** a component of the velocity of the surface (15) of the device under test (10) in a direction perpendicular to the sensitivity vector is at least twice and preferably at least 10 times as large as a component of the velocity of the surface (15) of the device under test (10) in the direction parallel to the sensitivity vector.

10. The method according to any one of claims 7 to 9, **characterized in that** a projection of a path length by which the surface (15) of the device under test (10) located in the object path (7) moves in the direction of the sensitivity vector during an integration time of a detector used to measure the surface (15) is equal to or larger than a component of the wavelength of the electromagnetic radiation in the direction of the sensitivity vector.

11. The method according to any one of claims 7 to 10, **characterized in that** for at least three mutually different discrete phase differences between the electromagnetic radiation in the object path (7) and the electromagnetic radiation in the reference path (8), an intensity is measured at a location of an interference pattern, respectively, and the height of the surface is determined from these at least three measurements, wherein during each of the measurements the phase change caused by the velocity of the surface of the device under test (10) in the direction parallel to the sensitivity vector is compensated for by means of the compensation means (4).

12. The method according to any one of claims 7 to 11, **characterized in that**, in an arrangement in which the object beam (7) and the reference beam (8) enclose a non-zero angle on the detector (11), the intensity of an interference pattern is measured at three adjacent locations of the interference pattern and the height of the surface (15) is determined from these at least three measurements, wherein during the measurements the phase change caused by the velocity of the surface (15) of the device under test (10) in the direction parallel to the sensitivity vector is compensated for by means of the compensation means (4).

**EP 3 581 879 B1**

**Revendications**

1. Dispositif (1) de mesure interférométrique d'une surface (15) d'un échantillon (10) en mouvement avec

   un interféromètre (2) qui comprend un chemin d'objet (7) et un chemin de référence (8),

   dans lequel l'interféromètre (2) est configuré et agencé de façon qu'une forme de la surface (15) de l'échantillon (1) puisse être mesurée et
   dans lequel une bissectrice entre un faisceau (16) du chemin d'objet (7) illuminant la surface (15) de l'échantillon (10) et une direction d'observation du chemin d'objet (7) définit un vecteur de sensibilité,

   un dispositif de compensation (4) qui est configuré et agencé de façon que, au moyen du dispositif de compensation (4), une différence de longueur de chemin optique entre le chemin d'objet (7) et le chemin de référence (8) puisse être réglée de manière variable,
   un dispositif de mesure (2) qui est agencé et configuré de façon que, lors du fonctionnement du dispositif (1), le dispositif de mesure (2) saisisse une direction de mouvement (12) de la surface (15) de l'échantillon (10) et/ou le nombre scalaire de la vitesse de la surface (15) de l'échantillon (10) dans la direction de mouvement (12) en tant que mesure pour le nombre scalaire de la vitesse (14) de la surface de l'échantillon (10) dans la direction parallèle au vecteur de sensibilité,
   un dispositif de commande (3),

   dans lequel le dispositif de commande (3) est connecté de façon effective au dispositif de compensation (4) de façon telle que la différence de longueur de chemin entre le chemin d'objet (7) et le chemin de référence (8) puisse être commandée de manière réglable,
   dans lequel le dispositif de commande (3) est connecté de façon effective au dispositif de mesure (2) de façon telle que, lors du fonctionnement du dispositif, le dispositif de commande (3) reçoive du dispositif de mesure (2) un signal de mesure qui comprend la mesure pour le nombre scalaire de la vitesse (14) de la surface de l'échantillon (10) dans la direction parallèle au vecteur de sensibilité, dans lequel le dispositif de commande (3) est agencé et configuré de façon telle que, lors du fonctionnement du dispositif (1), le dispositif de commande (3) commande le dispositif de compensation (4) de façon telle qu'un changement de la différence de longueur de chemin entre le chemin d'objet (7) et le chemin de référence (8), effectué par le dispositif de compensation (4), soit égal à un changement de la différence de longueur de chemin entre le chemin d'objet (7) et le chemin de référence (8) résultant d'une vitesse (14) de la surface (15) de l'échantillon (10) dans une direction parallèle au vecteur de sensibilité, afin de compenser le changement de phase causé par la vitesse de la surface (15) de l'échantillon (10) dans la direction parallèle au vecteur de sensibilité, et
   dans lequel le dispositif de commande (3) est agencé et configuré de façon telle que, lors du fonctionnement du dispositif (1), le dispositif de commande (3) détermine, à partir de la direction de mouvement (12) saisie de la surface (15) de l'échantillon (10) et/ou du nombre scalaire saisi de la vitesse de la surface (15) de l'échantillon (10) dans la direction de mouvement, le nombre scalaire de la vitesse de la surface (15) de l'échantillon (10) dans la direction parallèle au vecteur de sensibilité, et que, lors du fonctionnement du dispositif (1), le dispositif de commande (3) détermine, à partir du nombre scalaire de la vitesse (14) de la surface (15) de l'échantillon (10) parallèle au vecteur de sensibilité, la différence de longueur de chemin à ajuster,

   **caractérisé en ce que**
   le dispositif de mesure est constitué par l'interféromètre (2), dans lequel au moins une périodicité dans l'espace d'un motif d'interférence constitue une mesure pour la direction de mouvement (12) de la surface (15) de l'échantillon (10) ou pour le nombre scalaire de la vitesse dans la direction de mouvement, ou le contraste d'interférence d'un motif d'interférence constitue la mesure pour la direction de mouvement (12) de la surface (15) de l'échantillon (10) ou pour le nombre scalaire de la vitesse dans la direction de mouvement.

2. Dispositif (1) selon la revendication précédente, **caractérisé en ce que** le dispositif de commande (3) est agencé et configuré en outre de façon que, lors d'un fonctionnement du dispositif (1), le dispositif de commande (3) détermine à partir du nombre scalaire préalablement connu de la vitesse (14) de la surface (15) de l'échantillon (10) dans la direction parallèlement au vecteur de sensibilité, le changement de la différence de longueur de chemin entre le chemin d'objet (7) et le chemin de référence (8), à inciter par le dispositif de compensation (4).

3. Dispositif (1) selon l'une des revendications précédentes, **caractérisé en ce que** l'interféromètre (2) est un interféromètre de Speckle.

4. Dispositif selon l'une des revendications précédentes, **caractérisé en ce que** l'interféromètre (2) est un interféromètre pour plusieurs longueurs d'onde.

5. Dispositif de transformation selon l'une des revendications précédentes, **caractérisé en ce que** le dispositif de compensation (4) est agencé de façon que, lors du fonctionnement du dispositif (1), il change la longueur du chemin optique du chemin d'objet (7) et/ou du chemin de référence (8).

6. Dispositif selon l'une quelconque des revendications précédentes, **caractérisé en ce que** le dispositif de commande (3) et/ou le dispositif de compensation (4) sont agencés de façon telle que le dispositif de compensation (4) incite un changement de la différence de longueur de chemin entre le chemin d'objet (7) et le chemin de référence (8) d'un multiple prédéterminé de la longueur d'onde, retourne après l'obtention d'un changement de la différence de longueur de chemin de $n\lambda$, dans lequel n est un nombre entier et $\lambda$ la longueur d'onde de la radiation électromagnétique, à une différence de longueur de chemin initiale et incite de nouveau un changement de la différence de longueur de chemin d'un maximum de $n\lambda$ jusqu'à ce que le multiple prédéterminé de la longueur d'onde soit atteint.

7. Procédé pour une mesure interférométrique d'une surface (15) d'un échantillon (10) en mouvement avec les étapes de

repartir une radiation électromagnétique dans un interféromètre (2) sur un chemin d'objet (7 et un chemin de référence (8),
disposer l'échantillon (10) sur le chemin d'objet (7), dans lequel une bissectrice entre un faisceau (16) illuminant la surface (15) de l'échantillon (10) et une direction d'observation (16) du chemin d'objet (7) définit un vecteur de sensibilité,
mesurer la forme de la surface (15) de l'échantillon (10) avec l'interféromètre (2), compenser un changement de phase incité par une vitesse de la surface (15) de l'échantillon (10) dans la direction parallèle au vecteur de sensibilité, en changeant une différence de longueur de chemin optique entre le chemin d'objet (7) et le chemin de référence (8) de l'interféromètre (2) à l'aide d'un dispositif de compensation (4),
saisir une direction de mouvement (12) de la surface (15) de l'échantillon (10) et/ou d'un nombre scalaire de la vitesse de la surface (15) de l'échantillon (10) dans la direction de mouvement, à l'aide d'un dispositif de mesure,
déterminer le nombre scalaire de la vitesse de la surface (15) de l'échantillon (10) dans la direction parallèle au vecteur de sensibilité à partir de la direction de mouvement (12) saisie de la surface (15) de l'échantillon (10) et/ou du nombre scalaire saisi de la vitesse dans la direction de mouvement, et
déterminer la différence de longueur de chemin à ajuster à partir du nombre scalaire de la vitesse (14) de la surface (15) de l'échantillon (10) parallèle au vecteur de sensibilité,
**caractérisé en ce que**
le dispositif de mesure est constitué par l'interféromètre (2), dans lequel au moins une périodicité dans l'espace d'un motif d'interférence constitue une mesure pour la direction de mouvement (12) de la surface (15) de l'échantillon (10) ou pour le nombre scalaire de la vitesse dans la direction de mouvement, ou le contraste d'interférence d'un motif d'interférence constitue la mesure pour la direction de mouvement (12) de la surface (15) de l'échantillon (10) ou pour le nombre scalaire de la vitesse dans la direction de mouvement.

8. Procédé selon la revendication 7, **caractérisé en ce que**, pendant la mesure de la surface (15), la surface (15) de l'échantillon (10) subit un mouvement de translation à une vitesse constante, un mouvement de translation avec une accélération en fonction du temps, préalablement connue, un mouvement de rotation à une vitesse angulaire constante ou un mouvement en rotation avec une accélération angulaire en fonction du temps, préalablement connue.

9. Procédé selon la revendication 8, **caractérisé en ce qu'**une composante de la vitesse de la surface (15) de l'échantillon (10), dans une direction perpendiculaire au vecteur de sensibilité, est au moins deux fois et de préférence au moins dix fois une composante de la vitesse de la surface (15) de l'échantillon (10) dans la direction parallèle au vecteur de sensibilité.

10. Procédé selon l'une des revendications 7 à 9, **caractérisé en ce qu'**une projection d'une longueur de chemin sur la direction du vecteur de sensibilité, par laquelle longueur la surface (15) de l'échantillon (10) se déplace dans la direction du vecteur de sensibilité pendant un temps d'intégration d'un détecteur utilisé pour mesurer la surface (15), est égale ou supérieure à la longueur d'onde de la radiation électromagnétique.

11. Procédé selon l'une des revendications 7 à 10, **caractérisé en ce que**, pour au moins trois différences de phase discrètes différentes les unes des autres, entre la radiation électromagnétique sur le chemin d'objet (7) et la radiation électromagnétique sur le chemin de référence (8), au moins une intensité est mesurée à un endroit du motif d'interférence, et que, à partir de ces au moins trois mesures, la hauteur de la surface est déterminée, dans lequel, pendant chacune des mesures, le changement de phase incité par la vitesse de la surface de l'échantillon (10) dans la direction parallèle au vecteur de sensibilité, est compensé à l'aide du dispositif de compensation (4).

12. Procédé selon l'une des revendications 7 à 11, **caractérisé en ce que**, dans un agencement dans lequel le faisceau d'objet (7) et le faisceau de référence (8) enferment sur le détecteur (11) un angle différent de zéro, l'intensité d'un motif d'interférence est mesurée à trois endroits situés les uns à côté des autres et, à partir de ces au moins trois mesures, la hauteur de la surface (15) est déterminée, dans lequel, pendant les mesures, le changement de phase incité par la vitesse de la surface (15) de l'échantillon (10) dans la direction parallèle au vecteur de sensibilité, est compensé à l'aide du dispositif de compensation (4).

Fig. 1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4480914 A
- US 20120026508 A1
- WO 2017145145 A1
- US 20100128276 A1
- US 20100033733 A1

**In der Beschreibung aufgeführte Nicht-Patentliteratur**

- **M. TAKEDA et al.** Fourier-transform method of fringe-patten analysis for computer-based tomography and interferometry. *J. Opt. Soc. Am.,* 1982, vol. 72, 156-160